Europäisches Patentamt

European Patent Office

Office européen des brevets

(19)

(11) Veröffentlichungsnummer: **0 182 928**
**A1**

(12) **EUROPÄISCHE PATENTANMELDUNG**

(21) Anmeldenummer: **84114240.9**

(51) Int. Cl.⁴: **F 16 L 59/16**

(22) Anmeldetag: **26.11.84**

(43) Veröffentlichungstag der Anmeldung:
**04.06.86 Patentblatt 86/23**

(84) Benannte Vertragsstaaten:
**AT BE CH DE FR GB IT LI LU NL SE**

(71) Anmelder: **Jacobs, Ludwig**
**Lagesche Strasse 8**
**D-4790 Paderborn(DE)**

(72) Erfinder: **Jacobs, Ludwig**
**Lagesche Strasse 8**
**D-4790 Paderborn(DE)**

(74) Vertreter: **Beyer, Rudi**
**Patentanwalt Dipl.-Ing. Rudi Beyer Am Dickelsbach 8**
**D-4030 Ratingen 6 (Hösel)(DE)**

(54) **Gehäuse für wärmeisolierte Armaturen und/oder Flanschverbindungen.**

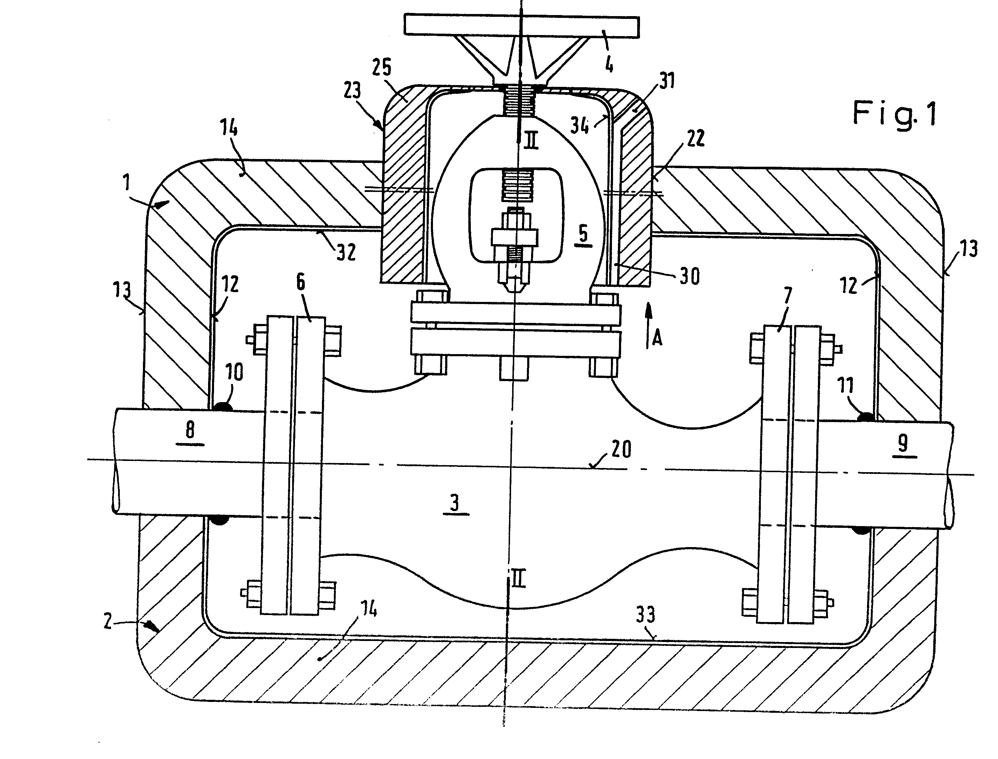

(57) Die Erfindung betrifft ein Gehäuse für wärmeisolierte Armaturen und/oder Flanschverbindungen mit zwei kastenförmign Gehäuseteilen (1 2), bei welchem unterschiedliche Abmessungen von Rohrleitungen (8, 9) bzw. der Betätigungsvorrichtung (5) für die Armatur (3), z.B. für einen Absperrschieber, durch je mindestens ein Adapterstück (23) kompensiert wird, wobei das Adapterstück (23), ebenso wie die Gehäuseteile (1, 2), wärmeisolierend ausgebildet ist (Figur 1).

Fig. 1

EP 0 182 928 A1

Patentanwalt Dipl.-Ing. R. Beyer Gneisenaustraße 1 D-4030 Ratingen 6

0182928

# Gehäuse für wärmeisolierte Armaturen und/oder Flanschverbindungen

## G a t t u n g

Die Erfindung betrifft ein Gehäuse für wärmeisolierte Armaturen und/oder Flanschverbindungen, mit zwei kastenförmigen Gehäuseteilen mit vorzugsweise zwei Öffnungen für die Rohrleitungen und insbesondere einer weiteren Öffnung für die aus dem Gehäuse herausgeführte Betätigungsvorrichtung der Armatur, wobei die Gehäuseteile benachbart der Gehäuseteilungsebene wenigstens je einen Flansch o. dgl. aufweisen und die Gehäuseteile durch Schrauben lösbar miteinander verbunden sind, die durch Umfangsabschnitte der Gehäuseteile in Form von Befestigungsflansche o. dgl. greifen, wobei insbesondere den Gehäuseteilen ihre Einbaulage zueinander vorzugsweise zentrierende bzw. bestimmende, formschlüssig ineinandergreifende, mit den Gehäuseteilen einstückig verbundene Zentriermittel zugeordnet sind, die nach Art einer Nut-Feder-Verbindung ausgestaltet sind und die sich über zumindest Teile des Umfanges der Gehäuseteile erstrecken.

- 2 -

## Stand der Technik

Ein Gehäuse gemäß der Gattung ist durch die US-PS 3 724 491 vorbekannt. Dieses Gehäuse besitzt den Nachteil, daß es wegen der Vielzahl der Befestigungsschrauben schwer zu montieren und zu demontieren ist. An der jeweils verdeckten Rückseite des Gehäuses lassen sich bei beengten Raumverhältnissen die Schrauben überhaupt nicht montieren, so daß dieses Gehäuse nur dort eingesetzt werden kann, wo allseitig ausreichend Raum zum Montieren und Demontieren zur Verfügung steht.

Durch das DE-GM 74 36 866 ist ein Gehäuse für wärmeisolierte Rohrleitungsschieber, bestehend aus zwei kastenförmigen Gehäuseteilen mit zwei koaxialen Öffnungen für die Rohrleitungen und einer weiteren Öffnung für die aus dem Gehäuse herausgeführte Schieberbetätigungseinrichtung vorbekannt, wobei die Öffnungen von der Teilungsebene des Gehäuses etwa halbiert sind und wobei jede Gehäusehälfte benachbart der Gehäuseteilungsebene eine nur von den Gehäuseöffnungen unterbrochenen Umfangsflansch aufweist, und jede Gehäuseöffnung von einem ringförmigen Stutzen begrenzt ist, derart, daß die Enden

Patentanwalt Dipl.-Ing. R. Beyer Gneisenaustraße 1 D-4030 Ratingen 6

- 3 -

der Umfangsflanschabschnitte im Bereich der Gehäuseöffnungen durch einen Halbringstutzen miteinander verbunden sind. Die Umfangsflansche ragen scharfkantig nach außen, und zwar rechtwinklig zur Umfangsebene der Gehäusehälften hervor und sind mittels druckknopfverschlußartiger Befestigungselemente lösbar miteinander zu verbinden, welche durch Löcher in den Umfangsflanschen hindurchgreifen.

Die nach außen abstehenden Umfangsflansche stören bei der Handhabung der Gehäuseteile, insbesondere bei engen Raumverhältnissen und können auch zu Handverletzungen der mit der Montage solcher Gehäuseteile beschäftigten Personen führen. Darüberhinaus vergrößern diese nach außen abstehenden Umfangsabschnitte den in Anspruch genommenen Raum, der nicht zur Verfügung steht. Da die Gehäuseteile häufig gelöst und wieder zusammengebaut werden müssen, weil z.B. dringend notwendige Wartungs- und/oder Reparaturarbeiten an den Armaturen, z.B. Absperrschiebern, vorzunehmen sind, ergibt sich der weitere Nachteil, daß die Druckknopfverbindung ausleiert und nicht mehr zuverlässig die Gehäuseteile verbindet.

Patentanwalt Dipl.-Ing. R. Beyer Gneisenaustraße 1 D-4030 Ratingen 6

- 4 -

Bekannt ist es auch, die Gehäuseteile um Armaturen und/oder
Rohrflansche anzuordnen und die Gehäuseteile durch Bänder
und Kniehebelverschlüsse gegeneinander zu arretieren.
Die Montage solcher Gehäuse ist umständlich. Außerdem
gehen in der Praxis oftmals Bänder verloren.

Dies hat zur Folge, daß dann entweder die Gehäuseteile
nicht oder nur unvollständig nach Durchführung von Wartungs-
und/oder Reparaturarbeiten montiert werden müssen, so
daß das Gehäuse seine Funktion nicht oder nicht vollständig
erfüllen kann.

Zudem bereitet bei dieser Konstruktion unter beengten
Raumverhältnissen das Lösen und Wiederbefestigen der
Gehäuseteile erhebliche Schwierigkeiten, zumal sich
die Gehäuseteile nur mühsam in eine paßgerechte Lage
zueinander bringen lassen.

Schließlich ist diese Lösung auch kostenaufwendig, wobei
ihre Funktion von der Sorgfalt des Montagepersonals
abhängig ist.

Patentanwalt Dipl.-Ing. R. Beyer Gneisenaustraße 1 D-4030 Ratingen 6

- 5 -

**Ältere, nicht vorveröffentlichte deutsche**

**und europäische Patentanmeldung**

Gegenstand der nicht vorveröffentlichten, auf den gleichen
Anmelder zurückgehenden deutschen Patentanmeldung P
33 38 633.1-25 und der entsprechenden europäischen Patentanmeldung bildet ein Gehäuse gemäß dem Gattungsbegriff,
wobei die Erfindung ein Gehäuse für wärmeisolierte Armaturen
und/oder Flanschverbindungen betrifft, mit zwei kastenförmigen Gehäuseteilen mit vorzugsweise zwei Öffnungen für
die Rohrleitungen und insbesondere einer weiteren Öffnung
für die aus dem Gehäuse herausgeführte Betätigungsvorrichtung
der Armatur, wobei die Gehäuseteile benachbart der Gehäuseteilungsebene wenigstens je einen Flansch aufweisen
und die Gehäuseteile durch Schrauben lösbar miteinander
verbunden sind, die durch Umfangsabschnitte der Gehäuseteile in Form von Befestigungsflanschen greifen, wobei
den Gehäuseteilen ihre Einbaulage zueinander zentrierende
bzw. bestimmende, formschlüssig ineinandergreifende,
mit den Gehäuseteilen einstückig verbundene Zentriermittel zugeordnet sind, die nach Art einer Nut-Feder-
Verbindung ausgestaltet sind und die sich über zumindest
Teile des Umfanges der Gehäuseteile erstrecken.

Patentanwalt Dipl.-Ing. R. Beyer Gneisenaustraße 1 D-4030 Ratingen 6

- 6 -

Dadurch, daß die Befestigungsflansche bei den nicht
vorveröffentlichten Patentanmeldungen nach innen, also
zum Innern des Gehäuses, gerichtet sind, sind bei diesem
nicht vorveröffentlichten Gehäuse an der Außenseite
keinerlei störende Teile vorhanden. Dadurch baut ein
solches Gehäuse relativ klein in seinen Außenabmessungen.
Auch stehen keine scharfen Kanten nach außen hervor,
an denen Verletzungen möglich wären.

Durch die nur an einer Seite angebrachten Schrauben
lassen sich die Gehäuseteile in ihre Zentriermittel
gegeneinanderziehen, so daß sich eine besonders stabile,
unverrückbare Lage der Gehäuseteile nicht nur in axialer
Richtung des Gehäuses, sondern auch quer dazu ergibt.
Die Zugänglichkeit dieser Befestigungsschrauben ist
immer gegeben, da sie stets so angeordnet werden können,
daß sie sich an der gut zugänglichen Stelle befinden.

Alles in allem ergibt sich eine robuste Konstruktion.
Die Zentriermittel lassen sich bei der Fertigung des
Gehäuses problemlos mit anformen. Dies gilt sowohl für
Gehäuse aus einem metallischen Werkstoff, z.B. aus Blech,
als auch für Kunststoff-Gehäuseteile.

- 7 -

Durch die Zentriermittel können die Gehäuseteile gewissermaßen "blind", und zwar auch in engen Raumecken, in
eine funktionsgerechte Lage gebracht und montiert werden.
Die Gehäuseteile werden dabei praktisch über den gesamten
Umfang des Gehäuses axial und radial zentriert und können
sich nicht z.B. quer gegeneinander verschieben. Dadurch
erhält das Gehäuse insgesamt ein geschlossenes, formschönes,
akkurates Äußeres, auf dem sich wenig Schmutz ansetzen
kann. Zusammen mit den Befestigungsschrauben lassen
sich dabei die Gehäuseteile so dicht gegeneinander ziehen,
daß die Gehäuseteile gewissermaßen fugenlos gegeneinander anliegen.

Im Rahmen dieser nicht vorveröffentlichten älteren Patentanmeldungen liegt eine Ausführungsform, bei welcher
die Zentriermittel einerseits eine gute Zentrierung
der Gehäuseteile durch formschlüssiges Ineinandergreifen
trapezförmig gestalteter Nuten und Sicken ermöglichen,
andererseits weisen solche Zentriermittel auch ein hohes
Widerstandsmoment gegen Verformung auf, so daß selbst
bei relativ hohen Querbeanspruchungen, die gegen ein
solches Gehäuse einwirken könnten, z.B. durch Stoß oder

Patentanwalt Dipl.-Ing. R. Beyer Gneisenaustraße 1 D-4030 Ratingen 6

- 8 -

Schlag, keine Relativverschiebung der Gehäuseteile zueinander stattfinden kann. Vielmehr bleiben die Gehäuseteile
schon nach dem Ineinandergreifen der Zentriermittel
in fluchtender Lage zueinander.

Die Befestigungsschrauben sind bei dieser nicht vorveröffentlichten Konstruktion mit mindestens einem der
Gehäuseteile unverlierbar verbunden. Dadurch können
auch nach mehrmaliger Demontage des Gehäuses die Befestigungsmittel nicht verlorengehen, z.B. nicht in engen
Kellerräumen auf den Boden fallen. Durch die besondere
Ausgestaltung der Schraublöcher wird sichergestellt,
daß auch lange Befestigungsschrauben zuverlässig in
Richtung auf die in den Flanschen vorgesehenen Schraublöcher
geführt werden, so daß keine langen Such- und/oder Anpaßarbeiten erforderlich sind, um die Schrauben in eine
paßgerechte Lage zu bringen, um sie anziehen zu können.

## A u f g a b e

Es hat sich gezeigt, daß es wünschenswert wäre, Gehäuse
nach den nicht vorveröffentlichten Patentanmeldungen
so auszugestalten, daß unterschiedliche Rohr- und/oder
unterschiedliche Abmessungen der Betätigungseinrichtung,
z. B. Spindelhöhen und/oder Spindeldurchmesser, berücksichtigt werden können.

- 9 -

L ö s u n g

Ausgehend von einem Gehäuse gemäß der als bekannt vorausgesetzten Gattung wird diese Aufgabe erfindungsgemäß
dadurch gelöst, daß der Öffnung für die aus dem Gehäuse
herausgeführte Betätigungsvorrichtung der Armatur und/oder
einem oder mehreren Öffnungen für die Rohrleitungen
jeweils ein in seiner axialen Erstreckung und/oder im
Durchmesser veränderliches Adapterstück zum Ausgleich
unterschiedlicher Abmessungen von Betätigungsvorrichtungen -
axiale Länge der Betätigungsvorrichtung und/oder deren
Durchmesser - und/oder der Rohrleitungen zugeordnet
ist bzw. sind.

### Einige Vorteile

Bei Ausgestaltung gemäß der Erfindung ist ein gattungsgemäßes Gehäuse auf die jeweiligen Abmessungen der Betätigungsvorrichtung der Armatur, z.B. einem Spindelgehäuse,
und/oder unterschiedlichen Rohrabmessungen, in einfacher
Weise und schnell adaptierbar.

Dadurch ist auch eine leichte Vorratshaltung möglich,
weil für bestimmte Armaturgrößen nur immer die gleichen
Gehäuseteile am Lager bereitgehalten zu werden brauchen, während unterschiedliche Typen von Betätigungsvorrichtungen durch ein entsprechendes Adapterstück
berücksichtigt werden. Diese Adaptierbarkeit an unterschiedliche Abmessungen von z.B. Betätigungsvorrichtungen
der Armatur läßt sich an Ort und Stelle vom Heizungsmonteur vornehmen, so daß für eine bestimmte Gehäusetype
ein Sortiment von Adapterstücken gefertigt werden kann,
mit dem alle am Markt vorkommenden Betätigungsvorrichtungstypen o. dgl. berücksichtigt werden können.

## Weitere Ausführungsformen

In **Patentanspruch 2** ist eine vorteilhafte Ausführungsform
beschrieben, bei welcher das Adapterstück z. B. reibschlüssig in einer Öffnung der betreffenden Gehäusehälften angeordnet ist. Beispielsweise kann das Adapterstück
für die Betätigungsvorrichtung vorgesehen sein und wird
entsprechend der Höhe der Betätigungsvorrichtung mehr
oder weniger weit in die zugeordnete Öffnung hineinbewegt, z. B. hineingeschoben. Diese Anpaßarbeiten können
ohne Werkzeuge in wenigen Augenblicken vorgenommen werden.

- 11 -

In **Patentanspruch 3** ist eine vorteilhafte Ausführungsform
der Erfindung beschrieben. Bei dieser wird sichergestellt,
daß das Adapterstück praktisch die gleiche Wärmeisolierung wie die Gehäuseteile aufweist.

Eine besonders vorteilhafte Ausführungsform beschreibt
**Patentanspruch 4.** Wird z. B. die Stopfbuchse der Betätigungsvorrichtung undicht, so kann die Leckflüssigkeit
über die Auslaufrinne und den Kanalabschnitt nach außen
hin ablaufen. Zu diesem Zweck wird das Gehäuse in der
Regel so angebracht, daß das Adapterstück mit der Auslaufrinne und dem sich daran anschließenden Kanalabschnitt
nach unten weisen, so daß die Flüssigkeit unter dem
Einfluß der Schwerkraft abläuft.

Eine weitere Verbesserung ergibt sich durch die Ausführungsform nach **Patentanspruch 5.**

Wird eine Ausführungsform nach **Patentanspruch 6** gewählt,
so lassen sich die Adapterstücke ebenso wie die Gehäuseteile jeweils materialmäßig einstückig aus einem geeigneten
Kunststoff hohlkastenartig herstellen, z. B. spritzgießen. In die Hohlräume lassen sich geeignete wärmeisolierende Stoffe, z. B. Polyurethanschäume, einbringen, die das Gewicht nur unwesentlich erhöhen.

**Patentanspruch 7** beschreibt eine weitere vorteilhafte Ausführungsform der Erfindung.

Bei der Ausführungsform nach **Patentanspruch 8** - ebenso wie bei allen anderen im Rahmen des Erfindungsgedankens (Aufgabe und Lösung) liegenden Ausführungsformen - kann auf nach innen gerichtete Flansche wie sie bei den nicht vorveröffentlichten Patentanmeldungen noch vorgesehen sind, verzichtet werden. Vielmehr ist es möglich, die Nut-Feder-Verbindung so auszugestalten, daß sie nicht nur als axiale und/oder radiale Arretierung, sondern auch als Flansch ausgebildet ist. In Bereichen dieser Nut-Feder-Verbindung greifen die Befestigungsschrauben in hier vorgesehenen, mit Gewinde ausgerüstete Sackbohrungen raumsparend und von außen unsichtbar ein. Es steht dem jedoch nichts im Wege, zusätzlich oder stattdessen noch nach innen gerichtete Flansche vorzusehen, in denen die Befestigung durch Schrauben wie bei den nicht vorveröffentlichten Patentanmeldungen vorgenommen wird.

Patentanwalt Dipl.-Ing. R. Beyer Gneisenaustraße 1 D-4030 Ratingen 6

- 13 -

In **Patentanspruch 9** ist eine weitere vorteilhafte Ausführungsform der Erfindung beschrieben, bei welcher
das betreffende Adapterstück einschraubbar ist.

**Patentanspruch 10** beschreibt eine weitere Alternativlösung.

In der Zeichnung ist die Erfindung an Ausführungsbeispielen -
teils schematisch - veranschaulicht. Es zeigen:

Fig.    1    ein Gehäuse gemäß der Erfindung im Längsschnitt,
             um einen Absperrschieber mit Betätigungsvorrichtung und zwei aus dem Gehäuse heraustretenden an die Armatur angeflanschten Leitungen
             montiert;

Fig.    2    einen Querschnitt nach der Linie II - II der
             Fig. 1;

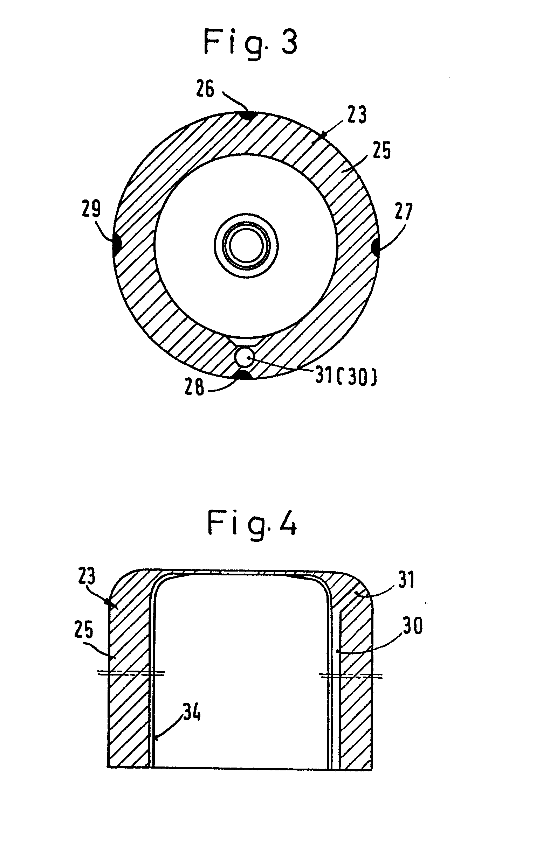

Fig.    3    ein Adapterstück in Ansicht des Pfeiles A
             in Fig. 1 und

Fig.    4    das aus Fig. 3 ersichtliche Adapterstück in
             dem der Fig. 1 entsprechenden Längsschnitt.

- 14 -

Mit den Bezugszeichen 1 bzw. 2 sind Gehäuseteile bezeichnet, die bei der dargestellten Ausführungsform eine Armatur 3 nach außen hin gegen Wärmeverlust Wärme isolieren. Diese Armatur 3 ist bei der dargestellten Ausführungsform als Absperrschieber mit einer Betätigungsvorrichtung 5 ausgerüstetdie ein Handrad 4 aufweist. An Flansche 6 bzw. 7 der Armatur 3 ist jeweils eine Rohrleitung 8 bzw. 9 angeflanscht. Bei der Armatur 3 und deren Betätigungsvorrichtung 5 mit Handrad 4 handelt es sich um eine handelsübliche Type. Anstelle einer als Absperrschieber ausgebildeten Armatur 3 kann auch jede andere Armatur oder eine Flanschverbindung innerhalb der Gehäuseteile 1 und 2 vorgesehen sein.

Die Rohrleitung 8 und 9 sind durch Dichtungen 10 bzw. 11 nach außen hin abgedichtet.

Die Gehäuseteile 1 und 2 sind hohlkastenförmig ausgebildet. Ihre Wandungen 12 bzw. 13 bestehen aus einem geeigneten schlag- und stoßfesten und gegen die vorkommenden Medien auch beständigen sowie ozonbeständigen, lichtechtem Kunststoff, z. B. aus Polypropylen, oder aus einem Polyurethan oder dergleichen.

Patentanwalt Dipl.-Ing. R. Beyer Gneisenaustraße 1 D-4030 Ratingen 6

- 15 -

Die zwischen den Wandungen 12 und 13 gebildeten Hohlräume
sind bei der dargestellten Ausführungsform mit einem
wärmeisolierenden Werkstoff, insbesondere mit Polyurethan-
schaumstoff 14 ausgefüllt. Anstelle von Polyurethanschaumstoff 14 kann auch jeder andere geeignete wärmeisolierende
Stoff, z. B. Schlacken- oder Glaswolle o. dgl. verwendet
werden. Durch die Einbringung von Kunststoffschäumen
in die durch die Wandungen 12 und 13 begrenzten Hohlräume
wird das Gewicht der Gehäuseteile 1 und 2 nur unwesentlich
erhöht, so daß sich diese besonders gut handhaben lassen.

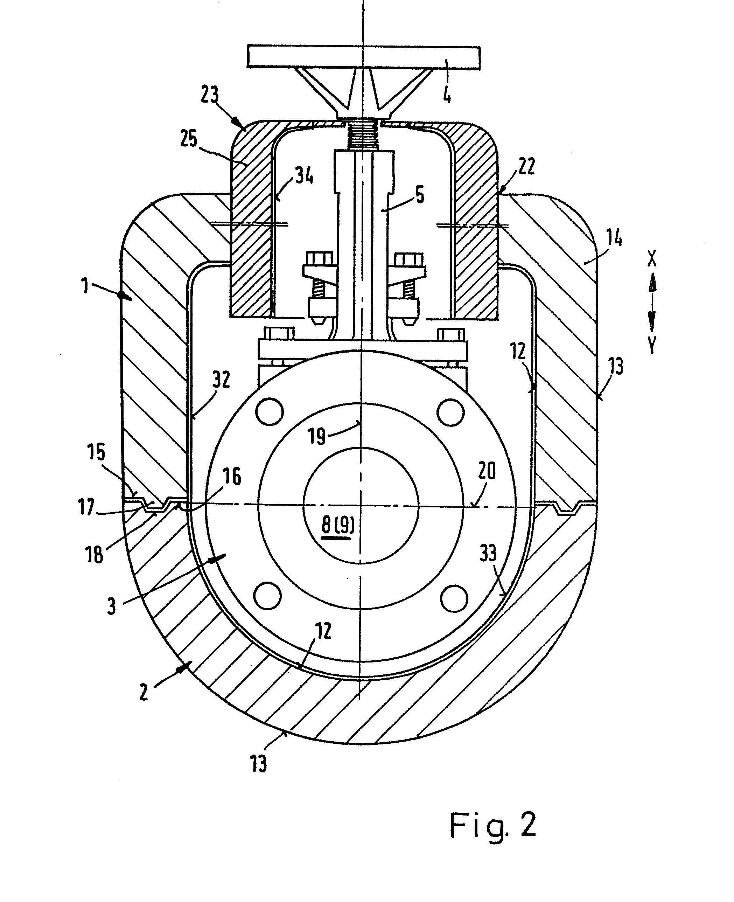

Deutlich läßt Fig. 2 erkennen, daß die Gehäuseteile
1 und 2 sich über einander zugekehrte Flansche 15 und
16 berühren. Das Gehäuseteil 1 ist mit einem aus Fig.
2 ersichtlichen Querschnitt mit einer Feder in Form
eines trapezförmigen Vorsprungs 17 versehen, die in
eine angepaßte Nut 18 eingreift, so daß Feder 17 und
Nut 18 eine Nut-Feder-Verbindung bilden, die die Gehäuseteile 1 und 2 axial und radial arretieren. Innerhalb
der durch die Flansche 15 und 16 gehenden Ebene verlaufen
nicht dargestellte Schrauben, die in sickenförmigen
Aussparungen des einen Gehäuseteils, z. B. 1, unverlierbar
angeordnet sind und in Sackbohrungen eingreifen, die in der Gegenfläche des anderen Gehäuseteils, vorliegend 2, ausmünden und in der Ebene, die durch die Flansche 15 und 16 gebildet ist, angeordnet sind. Beispielsweise können auf jeder Seite der Mittenachse 19 zwei solcher Befestigungsschrauben mit Abstand zueinander angeordnet sein. Fig. 2 läßt erkennen, daß die Flansche 15 und 16 und damit die Nut-Feder-Verbindung 17 und 18 in der Ebene der Gehäusequermittenachse 20 liegen. Diese Quermittenachse 20 verläuft durch den Mittelpunkt der Leitungen 8 und 9.

Koaxial zur Betätigungsvorrichtung 5 ist in dem Gehäuseteil 1 eine bei der dargestellten Ausführungsform im Querschnitt kreisrunde Öffnung 22 ausgespart, durch die ein Adapterstück 23 hindurchgreift, das ebenso wie die Gehäuseteile 1 bzw. 2 hohl ausgebildet ist und aus dem gleichen Werkstoff wie die Gehäuseteile 1 und 2 besteht. Der Hohlraum 24 kann mit dem gleichen wärmeisolierenden Stoff 25, beispielsweise Kunststoffschaum, ausgefüllt sein wie die Gehäuseteile 1, 2. Das Adapterstück 23 umgreift mit radialem Abstand die Betätigungsvorrichtung 5 und ist in seiner axialen Richtung, also in Richtung X bzw. Y, verstellbar angeordnet. Bei der dargestellten Ausführungsform besitzt

- 17 -

das Adapterstück 23 über seinen Umfang gleichmäßig verteilt angeordnete Führungsnuten 26, 27, 28 und 29, die
in entsprechende Vorsprünge des Gehäuseteils 1 eingreifen.
Diese Führungsnuten 26 bis 29 und die dazugehörigen
Vorsprünge des Gehäuseteils 1 können im Bedarfsfalle
auch entfallen.

Aus den Figuren 1 und 4 ist ersichtlich, daß im Innern
des Adapterstücks 23 eine Auslaufrinne 30, die in einen
stumpf anschließenden, nach außen ausmünden Kanalabschnitt
31 ausmündet, angeordnet ist. Durch diese Auslaufrinne
30 und den Kanal 31 läuft eventuelles Tropfwasser, das
durch die Stopfbuchse der Betätigungsvorrichtung 5 heraussickert, nach außen ab. Zu diesem Zweck wird das Gehäuse
so angeordnet, daß die Betätigungsvorrichtung 5 nach
unten weist, so daß das Tropfwasser unter dem Einfluß
der Erdschwere abläuft.

Wie ersichtlich ist, können die Gehäuseteile 1 und 2
für bestimmte Abmessungsbereiche unverändert gelassen
werden, während unterschiedliche Höhen (Längen) der
Betätigungsvorrichtung 5 und /oder Durchmesser durch
Austausch der Adapterstücke 23 kompensiert werden können.

- 18 -

Bei ein und demselben Durchmesser der Betätigungsvorrichtung
5 lassen sich unterschiedliche Längen durch axiale Verstellung in Richtung X bzw. Y der Adapterstücke 23 ausgleichen, was z. B. ohne weiteres durch mehr oder weniger
weites Hineinschieben des betreffenden Adapterstückes
23 geschehen kann.

Mit dem Bezugszeichen 32 bzw. 33 bzw. 34 ist eine vorzüglich wärmereflektierende Schicht, z. B. eine Aluminiumbeschichtung, bezeichnet.

Die in der Zusammenfassung, in den Patentansprüchen
und in der Beschreibung beschriebenen und aus der Zeichnung
ersichtlichen Merkmale können sowohl einzeln als auch
in Beliebigen Kombinationen für die Verwirklichung der
Erfindung wesentlich sein.

Patentanwalt Dipl.-Ing. R. Beyer Gneisenaustraße 1 D-4030 Ratingen 6

## B e z u g s z e i c h e n l i s t e

| | |
|---|---|
| 1 | Gehäuseteil |
| 2 | " |
| 3 | Armatur |
| 4 | Handrad |
| 5 | Betätigungsvorrichtung |
| 6 | Flansch |
| 7 | " |
| 8 | Rohrleitung |
| 9 | " |
| 10 | Dichtungen |
| 11 | " |
| 12 | Wandung |
| 13 | " |
| 14 | Polyurethan-Schaumstoff |
| 15 | Flansch |
| 16 | " |
| 17 | Vorsprung, Feder |
| 18 | Nut |

- 20-

| 19 | Mittenachse |
|---|---|
| 20 | Gehäusequermittenachse |
| 21 | - |
| 22 | Öffnung |
| 23 | Adapterstück |
| 24 | Hohlraum |
| 25 | Stoff |
| 26 | Führungsnuten |
| 27 | " |
| 28 | " |
| 29 | " |
| 30 | Auslaufrinne |
| 31 | Kanal |
| 32 | wärmereflektierende Schicht |
| 33 | " " |
| 34 | " " |
| A | Ansichtsrichtung |
| X | Verstellrichtung, Verschieberichtung |
| Y | " " |

Patentanwalt Dipl.-Ing. R. Beyer Gneisenaustraße 1 D-4030 Ratingen 6

*21*

## Literaturverzeichnis

I. **Nicht vorveröffentlichte Patentanmeldungen**

europäische Patentanmeldung        84 111 515.7 deutsche        Patentanmeldung        P 33 38 633.1-25

II. **Stand der Technik**

DE-GM        77 23 822

DE-GM        81 23 840

DE-GM        76 04 016

DE-GM        82 17 526.8

DE-GM        82 18 796.7

DE-GM        74 36 866

US-PS        3 724 491

DE-OS        2 400 306

DE-OS        2 411 161

Patentanwalt Dipl.-Ing. R. Beyer Gneisenaustraße 1 D-4030 Ratingen 6

P a t e n t a n s p r ü c h e

1. Gehäuse für wärmeisolierte Armaturen und/oder Flanschverbindungen, mit zwei kastenförmigen Gehäuseteilen
(1, 2) mit vorzugsweise zwei Öffnungen für die Rohrleitungen (8, 9) und insbesondere einer weiteren Öffnung (22)
für die aus dem Gehäuse (1, 2) herausgeführte Betätigungsvorrichtung (5) der Armatur (3), wobei die Gehäuseteile
(1, 2) benachbart der Gehäuseteilungsebene wenigstens
je einen Flansch (15, 16) o. dgl. aufweisen und
die Gehäuseteile (1, 2) durch Schrauben lösbar miteinander verbunden sind, die durch Umfangsabschnitte
der Gehäuseteile (1, 2) in Form von Befestigungsflansche o. dgl. greifen, wobei insbesondere den
Gehäuseteilen (1, 2) ihre Einbaulage zueinander
vorzugsweise zentrierende bzw. bestimmende, formschlüssig
ineinandergreifende, mit den Gehäuseteilen (1, 2)
einstückig verbundene Zentriermittel (17, 18) zugeordnet
sind, die nach Art einer Nut-Feder-Verbindung ausgestaltet sind und die sich über zumindest Teile des
Umfanges der Gehäuseteile (1, 2) erstrecken, **dadurch
gekennzeichnet**, daß der Öffnung (22) für die aus dem
Gehäuse (1, 2) herausgeführte Betätigungsvorrichtung
der Armatur (3) und/oder einer oder mehreren Öffnungen
für die Rohrleitungen (8, 9) jeweils ein in seiner

- 2 -

axialen Erstreckung und/oder im Durchmesser veränderliches Adapterstück (23) zum Ausgleich unterschiedlicher
Abmessungen von Betätigungsvorrichtungen (5) - axiale
Länge der Betätigungsvorrichtung (5) und/oder deren
Durchmesser - und/oder der Rohrleitungen (8, 9)
zugeordnet ist bzw. sind.

2. Gehäuse nach Anspruch 1, **dadurch gekennzeichnet**,
daß das Adapterstück (23) z.B. kraftschlüssig in
der Öffnung (22) der betreffenden Gehäusehälfte
angeordnet und axial in beiden Richtungen (X, Y)
verstellbar, insbesondere verschiebbar und in der
jeweils gewünschten Stellung auch arretierbar ausgebildet ist.

3. Gehäuse nach Anspruch 1 oder 2, **dadurch gekennzeichnet**,
daß das Adapterstück (23) die gleiche Wanddicke
und/oder Isolierdicke aufweist, wie die jeweils
zugeordneten Gehäuseteile (1, 2).

4. Gehäuse nach Anspruch 1 oder einem der folgenden,
**dadurch gekennzeichnet**, daß das betreffende Adapterstück (23) mit einer in axialer Richtung im Bereich deren

Patentanwalt Dipl.-Ing. R. Beyer Gneisenaustraße 1 D-4030 Ratingen 6

- 3 -

Innenwand verlaufenden, an einen nach außen ausmündenen
Kanalabschnitt (31) angeschlossenen Auslaufrinne
(30) zur Ableitung von Flüssigkeit ausgebildet ist.


5. Gehäuse nach Anspruch 1 oder einem der folgenden,
**dadurch gekennzeichnet**, daß die Gehäusehälften
(1, 2) und/oder das betreffende Adapterstück (23)
an der Innenwand mit einer hochreflektierenden Beschichtung, insbesondere aus Aluminium, versehen
ist.


6. Gehäuse nach Anspruch 1 oder einem der folgenden,
**dadurch gekennzeichnet**, daß die Adapterstücke (23)
und/oder die Gehäusehälften (1, 2) mindestens zweiwandig, hohlkastenförmig ausgebildet sind und daß die
Hohlräume mit einem geeigneten Isolierstoff (14),
z.B. Polyurethanschaum, ausgefüllt sind.


7. Gehäuse nach Anspruch 1 oder einem der folgenden,
**dadurch gekennzeichnet**, daß die tragenden Wandungen
der Adapterstücke (23) und/oder der Gehäusehälften
(1, 2) aus einem schlag- und kratzfesten, ozonbeständigen sowie gegen die Medien, mit denen Gehäuse (1, 2)
und die Adapterstücke (23) in Betrieb in Berührung
gelangen widerstandsfähigen Kunststoff, insbesondere aus

- 4 -

Polypropylen, bestehen.

8. Gehäuse nach Anspruch 1 oder einem der folgenden,
   bei dem mindestens ein Gehäuseteil (1) mit sickenförmigen Ausprägungen an seinem Umfang versehen
   ist, die mit Führungshülsen o. dgl. zusammenwirken,
   durch die jeweils eine Befestigungsschraube hindurchgreift, die nur an ihrem Endabschnitt mit Gewinde
   versehen ist, das in die Bohrung des zugehörigen
   Befestigungsflansches (18) o. dgl. am anderen Gehäuseteil (2) einschraubbar ist, **dadurch gekennzeichnet,**
   daß die Befestigungsschraube in eine mit Gewinde
   ausgestattete Sackbohrung eingreift, die in der
   Ebene der Nut-FederVerbindung (17, 18) angeordnet
   ist.

9. Gehäuse nach Anspruch 1 oder einem der folgenden,
   **dadurch gekennzeichnet,** daß das Adapterstück (23)
   einschraubbar ausgebildet ist.

10. Gehäuse nach Anspruch 1 oder einem der folgenden,
    **dadurch gekennzeichnet,** daß das Adapterstück (23)
    über Nut-Feder-Verbindungen (26 - 29), die an seinem
    Umfang angeordnet sind, in der betreffenden Öffnung
    der zugeordneten Gehäusehälfte (1) angeordnet ist.

0182928

Fig.1

2/3

0182928

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | DE-U-8 218 796 (FISCHER) <br> * Figuren 1-3 * | 1-3 | F 16 L 59/16 |
| A | DE-U-8 321 417 (KLEIN) <br><br> * Ansprüche 1,4,13; Figuren 1,2 * | 1,3,6, 8 | |
| A | DE-U-1 914 406 (BOCHUMER ROHRLEITUNGSBAU) <br> * Ansprüche 1,2; Figuren 2,3 * | 1,6,10 | |
| A | FR-A-1 010 144 (SOCIETE DE CHAUDRONNERIE ET DE CALORIFUGEAGE) <br> * Figuren 1,7 * | 1 | |
| A | EP-A-0 108 856 (HACKL) | | RECHERCHIERTE SACHGEBIETE (Int. Cl.4) |
| A | DE-U-7 032 819 (PARR) | | F 16 L 59/00 <br> F 16 K 27/00 |
| A | DE-U-1 973 739 (FISCHER & HERWIG) | | |
| D,A | US-A-3 724 491 (KNUDSEN et al.) | | |
| D,A | DE-U-7 436 866 (KLEIN) | | |

--- -/-

Der vorliegende Recherchenbericht wurde für alle Patentansprüche erstellt.

| Recherchenort <br> BERLIN | Abschlußdatum der Recherche <br> 05-07-1985 | Prüfer <br> SCHLABBACH M |
|---|---|---|

# 0182928
Nummer der Anmeldung

**EUROPÄISCHER RECHERCHENBERICHT**

Europäisches Patentamt

EP 84 11 4240

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|-----------|-----------------------------------------------------------------------------------|-------------------|----------------------------------------|
| D,A | DE-U-8 217 526 (FISCHER) | | |
| | ----- | | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---------------|----------------------------|--------|
| BERLIN | 05-07-1985 | SCHLABBACH M |